# EUROPÄISCHE PATENTANMELDUNG

(11) **EP 1 701 471 A1**
(43) Veröffentlichungstag der Anmeldung: **13.09.2006**
(21) Anmeldenummer: 05005304.0
(22) Anmeldetag: 10.03.2005
(51) Int. Cl.: H04L 12/24

(54) **Managementverfahren für ein Kommunikationssystem**

(71) Anmelder: SIEMENS AKTIENGESELLSCHAFT, 80333 München (DE)
(72) Erfinder: Suerbaum, Clemens, 81371 München (DE)

(57) **Zusammenfassung**

Die Erfindung betrifft ein Verfahren zum Betreiben eines zumindest einen Manager (NMC) und mehrere Agenten (OMC, NE1, NE2, NE3) umfassenden Managementsystems, bei dem der Manager (NMC) Meldungen von Agenten (OMC, NE1, NE2, NE3) empfängt. Der Manager (NMC) sendet eine Nachricht mit einem Verbot, Meldungen an ihn zu senden, wobei die Nachricht eine Angabe von von dem Verbot ausgenommenen Meldungen beinhaltet. Weiterhin betrifft die Erfindung ein Verfahren zum Betreiben eines Managementsystems, bei dem der Manager (NMC) Kommandos an Agenten (OMC, NE1, NE2, NE3) sendet, und weiterhin eine Nachricht sendet mit einem Verbot, Kommandos des Managers (NMC) und/oder eines anderen Managers auszuführen bzw. weiterzuleiten, wobei die Nachricht eine Angabe von von dem Verbot ausgenommenen Kommandos beinhaltet.

## Beschreibung

Die Erfindung betrifft Verfahren, sowie Manager und Agenten zum Betreiben eines Managementsystems.

Gemäß den Prinzipien eines Managementnetzes, auch als TMN-Prinzipien (TMN: Telecommunications Management Network) bezeichnet, existieren mehrere Managementschichten für das Management eines Kommunikationssystems - wie beispielsweise eines Mobilfunkkommunikationssystems -, wobei jede Schicht mit Ausnahme der obersten und untersten Schicht eine doppelte Funktion, nämlich eine Manager- und eine Agentenfunktion besitzt. Im managenden System ("managing system") übt jede Ebene außer der untersten eine Manager-Funktion für die darunterliegende Ebene aus. Im gemanagten System ("managed system") kommt jeder Ebene außer der obersten eine AgentenFunktion für die nächsthöhere Schicht zu.

Manager starten zur Netzüberwachung und -kontrolle Operationen, indem sie Kommandos, sogenannte "requests", versenden, die von Agenten ausgeführt werden, und erhalten entsprechende Rückmeldungen, sogenannte "responses", von den Agenten. Elemente des Telekommunikationsnetzes, auch als Ressourcen des Telekommunikationsnetzes bezeichnet, die in einer TMN-Hierarchie die Rolle eines Agenten ausüben, erkennen relevante Ereignisse, sogenannte "events", wie z.B. Alarme, generieren entsprechende Meldungen, sogenannte "notifications", und übertragen sie an Manager, um ein effizientes Netzmanagement zu ermöglichen.

Das Netzwerkmanagement kann unter anderem das Fehlermanagement (Fault-Management) und/oder das Konfigurationsmanagement (Configuration Management) und/oder das Sicherheitsmanagement (Security-Management) und/oder das des Abrechnungsmanagement (Accounting-Management) und/oder das Leistungsmanagement (Performance-Management) umfassen. Durch das Netzwerkmanagement sollen geeignete Mechanismen zur Informationsverteilung und -verwaltung bereitgestellt werden, so dass bei Bedarf ein umfassendes Bild über den Netzzustand zur Verfügung steht und die einzelnen Objekte des Telekommunikationsnetzes effizient überwacht und konfiguriert werden können.

Die Manager-Agent-Kommunikation erfolgt über sogenannte Management-Schnittstellen bzw. Manager-Agent-Schnittstellen, die in einer objekt-orientierten Umgebung durch ein Kommunikationsprotokoll, wie z.B. CMIP (Common Management Information Protocol) nach ITU-T X.711 oder CORBA (Common Object Request Broker Architecture), und durch ein Objektmodell gekennzeichnet sind. Objektmodelle dienen der Modellierung von Ressourcen des Telekommunikationsnetzes, wobei diese Ressourcen bei der Modellierung in Objektklassen eingeteilt werden.

Solche Schnittstellen gibt es beispielsweise zwischen einerseits der Netzwerkelementmanagement-Ebene (Network Element Management Level) und andererseits der Netzwerkelement-Ebene (Network Element Level). Ein Beispiel für Netzeinrichtungen dieser Manager-Agent-Schnittstelle stellen die Betriebs- und Wartungszentren (OMC: Operation and Maintenance Center) auf der Seite der Netzwerkelementmanagement-Ebene dar, sowie auf der Seite der Netzwerkelement-Ebene Einrichtungen wie z.B. Basisstationen des Basisstationssystems (BSS: Base Station System) eines GSM Mobilfunknetzes, oder Basisstationen anderer Kommunikationsnetze, beispielsweise NodeB's eines UMTS Mobilfunknetzes (UMTS: Universal Mobile Telecommunication System), oder Funkzugangspunkte eines WLAN-Systems (WLAN: Wireless Local Area Network) beispielsweise gemäß einem der IEEE 802.11-Standards.

Management-Schnittstellen bzw. Manager-Agent-Schnittstellen existieren auch zwischen einerseits der Netzwerkmanagement-Ebene (Network Management Level) und andererseits der Netzwerkelementmanagement-Ebene. Ein Beispiel für Netzeinrichtungen zu dieser Manager-Agent-Schnittstelle stellen die Netzwerkmanagementzentren (NMC: Network Management Center) auf der Seite der Netzwerkmanagement-Ebene und die Betriebs- und Wartungszentren (OMC: Operation and Maintenance Center) auf der Seite der Netzwerkelementmanagement-Ebene z.B. im genannten GSM oder einem anderen Mobilfunk- oder Telekommunikationsnetz dar.

Der Erfindung liegt die Aufgabe zugrunde, effiziente Verfahren zum Betreiben eines Managementnetzes aufzuzeigen. Weiterhin sollen geeignete Manager und ebensolche Agenten zur Durchführung der Verfahren vorgestellt werden.

Diese Aufgabe wird durch ein Verfahren mit den Merkmalen des Anspruchs 1, sowie durch Verfahren und Vorrichtungen mit Merkmalen von nebengeordneten Ansprüchen gelöst. Vorteilhafte Ausgestaltungen und Weiterbildungen sind Gegenstand von Unteransprüchen.

Bei dem erfindungsgemäßen Verfahren zum Betreiben eines zumindest einen Manager und Agenten umfassenden Managementsystems empfängt der Manager Meldungen von Agenten. Der Manager sendet eine Nachricht mit einem Verbot, Meldungen an ihn zu senden, wobei die Nachricht eine Angabe von von dem Verbot ausgenommenen Meldungen beinhaltet.

Meldungen werden aufgrund bestimmter Ereignisse von Agenten erzeugt und an den Manager gesendet. Die Agenten können hierbei direkt mit dem Manager verbunden sein, es ist jedoch auch möglich, dass ein Agent die Meldungen an eine Einrichtung sendet, welche die Meldungen an den Manager weiterleitet. Auch die Nachricht mit dem Verbot kann von dem Manager direkt an den oder die betroffenen Agenten gesendet werden oder an eine Einrichtung, welche die Nachricht mit dem Verbot an den oder die jeweiligen Agenten weiterleitet. Bei dem Manager kann es sich beispielsweise um einen Manager einer ersten Hierarchiestufe eines hierarchischen Managementsystems handeln, bei der weiterleitenden Einrichtung um einen Agenten einer zweiten, gegenüber der ersten Hierarchiestufe niedrigeren Hierarchiestufe, und bei den die Meldungen sendenden Agenten um Agenten einer dritten, gegenüber der zweiten Hierarchiestufe niedrigeren Hierarchiestufe.

Die Nachricht kann eine explizite oder implizite Angabe von von dem Verbot ausgenommenen Meldungen beinhalten. Implizit ist die Angabe z.B. dann, wenn zuvor vereinbart oder festgelegt wurde, dass für eine oder mehrere bestimmte Meldungen die Versendung an den Manager durch die Nachricht nicht verboten werden kann. In diesem Fall trägt die Nachricht aufgrund der Vereinbarung implizit die Angabe, dass die bestimmte(n) Meldung(en) von dem Verbot ausgenommen ist.

Einem weiteren erfindungsgemäßen Verfahren zum Betreiben eines zumindest einen Manager, einen Agenten und einen weiteren Agenten umfassenden Managementsystems gemäß empfängt der Agent Meldungen von dem weiteren Agenten und leitet diese an den Manager weiter. Der Agent empfängt von dem Manager eine Nachricht mit einem Verbot, Meldungen des weiteren Agenten an den Manager weiterzuleiten, wobei die Nachricht eine Angabe von von dem Verbot ausgenommenen Meldungen beinhaltet. Nach Empfang einer Meldung des weiteren Agenten berücksichtigt der Agent das Verbot und die Ausnahme von dem Verbot bei einer Entscheidung über die Weiterleitung der Meldung zum Manager.

In Weiterbildung der Erfindungen ist das Verbot beschränkt auf einen oder mehrere bestimmte Agenten und/oder auf eine bestimmte Zeitspanne. Der oder die bestimmten Agenten und/oder die bestimmte Zeitspanne sind vorzugsweise in der Nachricht mit dem Verbot enthalten.

Einer anderen Weiterbildung der Erfindungen gemäß ist die Ausnahme von dem Verbot beschränkt auf einen oder mehrere bestimmte Agenten und einen oder mehrere bestimmte Meldungen dieser Agenten. Die bestimmte oder die bestimmten Meldungen werden vorzugsweise in der Nachricht mit dem Verbot indiziert durch Angabe von mindestens einer Meldungsart und/oder von mindestens einem Meldungsinhalt. Auf diese Weise können für den Manager besonders wichtige Meldungen von dem Verbot ausgenommen werden.

Einem weiteren erfindungsgemäßen Verfahren zum Betreiben eines zumindest einen Manager und Agenten umfassenden Managementsystems gemäß sendet der Manager Kommandos an Agenten. Der Manager sendet eine Nachricht mit einem Verbot, Kommandos des Managers und/oder eines anderen Managers auszuführen und/oder weiterzuleiten, wobei die Nachricht vorzugsweise eine Angabe von von dem Verbot ausgenommenen Kommandos beinhaltet.

Der Manager sendet Kommandos, wobei die Versendung direkt an einen Agenten erfolgen kann, welcher das Kommando ausführen soll, oder an eine Einrichtung, welche das Kommando an diesen Agenten weiterleitet. Ein Kommando entspricht einer Aufforderung zur Durchführung einer bestimmten Tätigkeit, wie z.B. zur Durchführung eines Tests oder zur Zurückgabe eines bestimmten Werts. Auch die Nachricht mit dem Verbot kann von dem Manager direkt an den oder die betroffenen Agenten gesendet werden oder an eine Einrichtung, welche die Nachricht mit dem Verbot an den oder die jeweiligen Agenten weiterleitet. Wird die Nachricht mit dem Verbot direkt an einen von dem Verbot betroffenen Agenten gesendet, so kann sich das Verbot derart auswirken, dass der Agent das Verbot vor der Ausführung eines empfangenen Kommandos berücksichtigt. Wird die Nachricht mit dem Verbot an eine Einrichtung gesendet, welche für die Weiterleitung von Kommandos an einen von dem Verbot betroffenen Agenten zuständig ist, so kann sich das Verbot derart auswirken, dass die Einrichtung das Verbot als Verbot der Weiterleitung von Kommandos an den jeweiligen Agenten auffasst. Alternativ hierzu kann die Einrichtung die Nachricht mit dem Verbot an den von dem Verbot betroffenen Agenten weiterleiten, welcher daraufhin so verfährt, als hätte er die Nachricht mit dem Verbot direkt von dem Manager empfangen. Bei dem Manager kann es sich beispielsweise um einen Manager einer ersten Hierarchiestufe eines hierarchischen Managementsystems handeln, bei der weiterleitenden Einrichtung um einen Agenten einer zweiten, gegenüber der ersten Hierarchiestufe niedrigeren Hierarchiestufe, und bei den die Meldungen sendenden Agenten um Agenten einer dritten, gegenüber der zweiten Hierarchiestufe niedrigeren Hierarchiestufe.

Die Nachricht kann eine explizite oder implizite Angabe von von dem Verbot ausgenommenen Kommandos beinhalten. Implizit ist die Angabe z.B. dann, wenn zuvor vereinbart oder festgelegt wurde, dass für eine oder mehrere bestimmte Kommandos die Ausführung und/oder Weiterleitung durch die Nachricht nicht verboten werden kann. In diesem Fall trägt die Nachricht aufgrund der Vereinbarung implizit die Angabe, dass das oder die bestimmten Kommandos von dem Verbot ausgenommen sind.

Einem weiteren erfindungsgemäßen Verfahren zum Betreiben eines zumindest einen Manager, einen Agenten und einen weiteren Agenten umfassenden Managementsystems gemäß empfängt der Agent von dem Manager Kommandos und leitet diese an den weiteren Agenten zur Ausführung weiter. Der Agent empfängt von dem Manager eine Nachricht mit einem Verbot, Kommandos des Managers und/oder eines anderen Managers an den weiteren Agenten weiterzuleiten. Nach Empfang eines Kommandos von dem Manager und/oder von einem anderen Manager berücksichtigt der Agent das Verbot bei einer Entscheidung über die Weiterleitung des Kommandos an den weiteren Agenten. Einer besonders bevorzugten Ausführungsform der Erfindung gemäß beinhaltet die Nachricht eine Angabe von von dem Verbot ausgenommenen Kommandos, und der Agent berücksichtigt nach Empfang eines Kommandos von dem Manager und/oder von einem anderen Manager bei einer Entscheidung über die Weiterleitung der Kommandos an den weiteren Agenten das Verbot und die Ausnahme.

In Weiterbildung der Erfindungen ist das Verbot beschränkt auf einen oder mehrere bestimmte Agenten und/oder auf eine bestimmte Zeitspanne. Der oder die bestimmten Agenten und/oder die bestimmte Zeitspanne sind vorzugsweise in der Nachricht mit dem Verbot enthalten.

Einer anderen Weiterbildung der Erfindungen gemäß ist die Ausnahme von dem Verbot beschränkt auf einen oder mehrere bestimmte Agenten und einen oder mehrere bestimmte Kommandos für diese Agenten. Die bestimmte oder die bestimmten Kommandos werden vorzugsweise in der Nachricht mit dem Verbot indiziert durch Angabe von mindestens einer Kommandoart und/oder von mindestens einem Kommandoinhalt. Auf diese Weise können für den Manager besonders wichtige Kommandos von dem Verbot ausgenommen werden.

Ein erster erfindungsgemäßer Manager weist Mittel auf zum Empfangen von Meldungen von Agenten, und Mittel zum Senden einer Nachricht mit einem Verbot, Meldungen an den Manager zu senden, wobei die Nachricht eine Angabe von von dem Verbot ausgenommenen Meldungen beinhaltet.

Ein zweiter erfindungsgemäßer Manager weist Mittel auf zum Senden von Kommandos an Agenten, und Mittel zum Senden einer Nachricht mit einem Verbot, Kommandos des Managers und/oder eines anderen Managers auszuführen und/oder weiterzuleiten, wobei die Nachricht vorzugsweise eine Angabe von von dem Verbot ausgenommenen Kommandos beinhaltet.

Ein erster erfindungsgemäßer Agent weist Mittel auf zum Empfangen von Meldungen von einem weiteren Agenten und zum Weiterleiten der Meldungen an den Manager, sowie Mittel zum Empfangen einer Nachricht von dem Manager mit einem Verbot, Meldungen des weiteren Agenten an den Manager weiterzuleiten, wobei die Nachricht eine Angabe von von dem Verbot ausgenommenen Meldungen beinhaltet, sowie Mittel zum Berücksichtigen des Verbots und der Ausnahme von dem Verbot nach dem Empfang einer Meldung des weiteren Agenten bei einer Entscheidung über die Weiterleitung der Meldung zum Manager.

Ein zweiter erfindungsgemäßer Agent weist Mittel auf zum Empfangen von Kommandos von dem Manager und zum Weiterleiten der Kommandos an den weiteren Agenten zur Ausführung, sowie Mittel zum Empfangen einer Nachricht von dem Manager mit einem Verbot, Kommandos des Managers und/oder eines anderen Managers an den weiteren Agenten weiterzuleiten, und Mittel zum Berücksichtigen des Verbots nach Empfang eines Kommandos von dem Manager und/oder einem anderen Manager bei einer Entscheidung über die Weiterleitung des Kommandos an den weiteren Agenten.

Sowohl die erfindungsgemäßen Manager als auch die erfindungsgemäßen Agenten eignen sich insbesondere zur Durchführung der jeweiligen erfindungsgemäßen Verfahren, wobei dies auch auf die Ausgestaltungen und Weiterbildungen zutreffen kann. Hierzu können sie weitere geeignete Mittel umfassen.

Im folgenden wird die Erfindung anhand eines Ausführungsbeispiels näher erläutert. Dabei zeigen:
- Figur 1:: einen Ausschnitt aus einem Managementsystem,
- Figur 2:: einen ersten erfindungsgemäßen Nachrichtenaustausch,
- Figur 3:: den Aufbau einer ersten erfindungsgemäßen Nachricht,
- Figur 4:: einen zweiten erfindungsgemäßen Nachrichtenaustausch,
- Figur 5:: den Aufbau einer zweiten erfindungsgemäßen Nachricht.

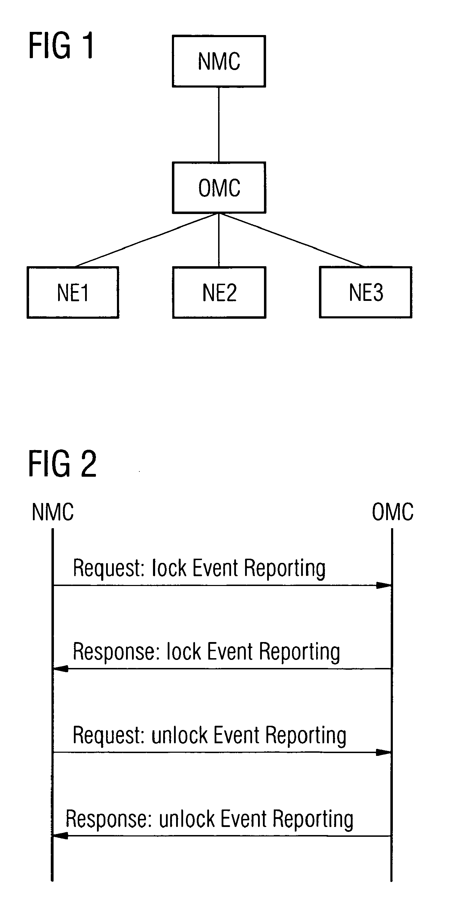

Der in Figur 1 dargestellte Ausschnitt aus einem Managementsystem eines Mobilfunkkommunikationssystems nach dem Standard UMTS umfasst das Netzwerkmanagementzentrum NMC, den Netzelementmanager OMC und die Netzelemente NE1, NE2 und NE3. Das Netzwerkmanagementzentrum NMC fungiert gegenüber dem Netzelementmanager OMC als Manager, während der Netzelementmanager OMC gegenüber den Netzelementen NE 1, NE 2 und NE 3 als Manager fungiert. Bei den Netzelementen NE 1, NE 2 und NE 3 kann es sich z.B. um Basisstationen oder Basisstationscontroller handeln. Neben den in Figur 1 dargestellten Managementeinrichtungen können weitere Einrichtungen Bestandteil des Managementsystems sein. Alternativ zur Konfiguration des Managementsystems gemäß Figur 1 ist die Erfindung auch auf eine Konfiguration anwendbar, bei welcher eines oder mehrere der Netzelemente NE 1, NE 2 und NE 3 direkt an das Netzwerkmanagementzentrum NMC angeschlossen ist.

Die Netzelemente NE 1, NE 2 und NE 3 senden als Notifications bezeichnete Meldungen an den Netzelementmanager OMC, welcher diese an das Netzwerkmanagementzentrum NMC weiterleitet. Die Notifications können z.B. aus Alarmmeldungen oder Meldungen über eine Statusänderung bestehen. Sie werden von den Netzelementen NE 1, NE 2 und NE 3 bei bestimmten Anlässen, so genannten events, erzeugt und versendet. Bei der Wartung, beim Austausch und beim Testen der Netzelemente NE 1, NE 2 und NE 3 beispielsweise ist es möglich, dass eine Vielzahl von Notifications von den Netzelementen NE 1, NE 2 und NE 3 erzeugt und versendet werden. Aufgrund des Ausnahmezustands, in welchem sich die Netzelemente NE 1, NE 2 und NE 3 während der Erzeugung dieser Notifications befinden, benötigt das Netzwerkmanagementzentrum NMC diese Notifications oftmals nicht. Durch ihre große Anzahl kann es dazu kommen, dass die Identifikation wichtiger Notifications erschwert wird. Überdies lasten die vielen während der Ausnahmesituation gesendeten Notifications die Schnittstellen zwischen den Netzelementen NE 1, NE 2 und NE 3 und dem Netzelementmanager OMC, sowie zwischen dem Netzelementmanager OMC und dem Netzwerkmanagementzentrum NMC stark aus.

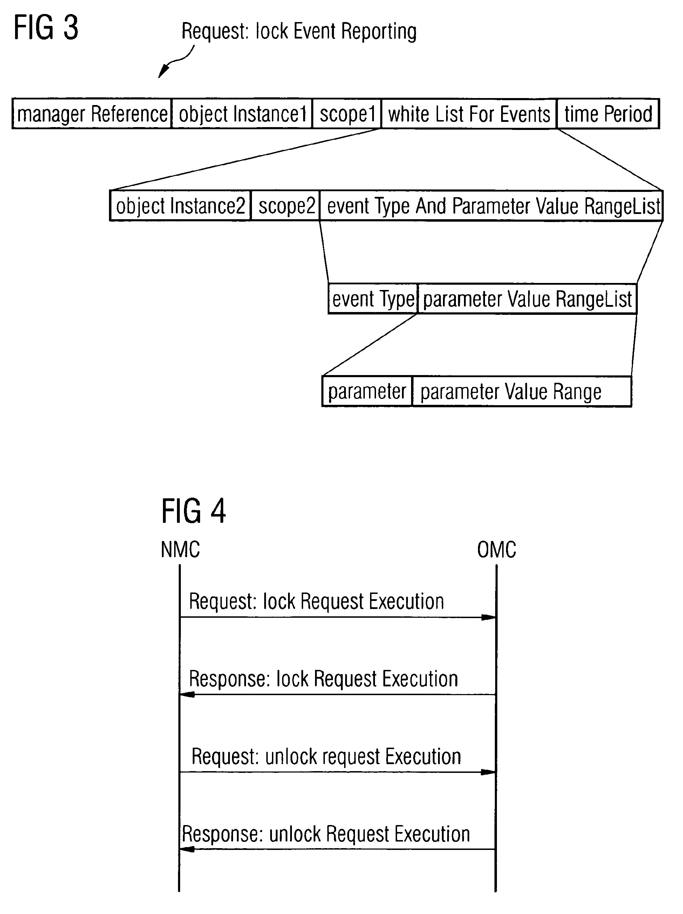

Um dem Netzwerkmanagementzentrum NMC zu ermöglich, die Weiterleitung von Notifications durch den Netzelementmanager OMC zeitweilig "abzuschalten", wird eine Nachricht Request:lockEventReporting verwendet, welche gemäß dem Ablaufdiagramm der Figur 2 von dem Netzwerkmanagementzentrum NMC zu dem Netzelementmanager OMC gesendet wird. Figur 3 zeigt den Aufbau der Nachricht Request:lockEventReporting. Zusätzlich zu den in Figur 3 dargestellten Bestandteilen kann die Nachricht Request:lockEventReporting weitere, für das Verständnis der Erfindung nicht relevante Bestandteile aufweisen. Von der in Figur 3 dargestellten Reihenfolge der Bestandteile der Nachricht Request:lockEventReporting kann abgewichen werden. Die Bezeichnungen der Bestandteile der Nachricht Request:lockEventReporting gemäß Figur 3 beziehen sich sowohl auf die Bestandteile, als auch auf die Informationsgehalte der Bestandteile.

Im folgenden werden die Bestandteile der Nachricht Request:lockEventReporting näher erläutert:
- managerReference: Dieses Feld beinhaltet Identifikationsinformationen des Netzwerkmanagementzentrums NMC.
- objectInstance1: Dieses Feld gibt eines oder mehrere der Netzelemente NE 1, NE 2 und NE 3 an, dessen oder deren Notifications von dem Netzelementmanager OMC nicht an das Netzwerkmanagementzentrum NMC weitergeleitet werden sollen.
- scope1: Dieses optionale Feld dient der Bezeichnung weiterer Agenten, deren Notifications von dem Netzelementmanager OMC nicht an das Netzwerkmanagementzentrum NMC weitergeleitet werden sollen. Die durch das Feld scopel bezeichneten Agenten stehen hierbei in einem Objektbaum jeweils unter einem durch das Feld objectinstancel bezeichneten Agenten, mit welchem sie in dem Objektbaum verbunden sind.
- whiteListForEvents: Dieses Feld dient der Definition von Ausnahmen des Verbots der Weiterleitung von Notifications. Sein Aufbau ist in Figur 3 wiedergegeben und wird untenstehend erläutert.
- timePeriod: Dieses Feld kann zur Angabe einer Zeitspanne genutzt werden, während welcher das Verbot der Weiterleitung von Notifications an das Netzwerkmanagementzentrum NMC gilt.

Im folgenden werden die Bestandteile des Feldes whiteListForEvents, welches das Durchlassen bestimmter Notifications entgegen der Verbotsregel der anderen Bestandteile der Nachricht Request:lockEventReporting ermöglicht, näher erläutert:
- objectInstance2 Dieses optionale Feld dient der Angabe derjenigen Netzelemente NE 1, NE 2 und NE 3, deren Notifications von der Ausnahme des Verbots der Weiterleitung von Notifications betroffen sind. Hierbei kann es sich ausschließlich um Netzelemente NE 1, NE 2 und NE 3 handeln, welche durch das oben beschriebene Feld objectInstance1 bzw. objectinstancel in Kombination mit scope1 der Nachricht Request:lockEventReporting bezeichnet sind. Wird das Feld objectInstance2 des Feldes whiteListForEvents nicht genutzt, bedeutet dies, dass alle Netzelemente NE 1, NE 2 und NE 3, welche durch das oben beschriebene Feld objectInstance1 der Nachricht Request:lockEventReporting bezeichnet sind, von der Ausnahme betroffen sind.
- scope2: Wie bereits in Bezug auf das Feld scopel der Nachricht Request:lockEventReporting erläutert, kann das optionale Feld scope2 zur Angabe weiterer, im Objektbaum jeweils unter einem Agenten des Feldes objectInstance2 stehender Agenten eingesetzt werden.
- eventTypeAndParameterValueRangeList: Dieses Feld dient der Angabe derjenigen Notifications, welche trotz des Verbots an das Netzwerkmanagementzentrum NMC weiterzuleiten sind. Es handelt sich hierbei im allgemeinen um eine Liste, da mehrere Notifications von der Ausnahmeregel umfasst sein können. Sein Aufbau ist in Figur 3 wiedergegeben und wird untenstehend erläutert.

Im folgenden werden die Bestandteile des Feldes eventTypeAndParameterValueRangeList näher erläutert:
- eventType: Dieses Feld gibt Arten von Ereignissen an, in Bezug auf welche Notifications trotz des Verbots weiterzuleiten sind, d.h. bestimmte Arten von Notifications. Beispielsweise kann das Netzwerkmanagementzentrum NMC hierdurch vorgeben, dass die im Zusammenhang mit Feueralarmen erzeugten Notifications trotz des generellen Weiterleitungsverbots weiterzuleiten sind.
- parameterValueRangeList: Während durch das Feld eventType bestimmte Arten von Notifications von dem generellen Verbot der Weiterleitung ausgenommen werden können, ermöglicht das Feld parameterValueRangeList Notifications gemäß bestimmten Inhalten dieser Notifications von dem Verbot der Weiterleitung auszunehmen. Sein Aufbau ist in Figur 3 wiedergegeben und wird untenstehend erläutert.

Im folgenden werden die Bestandteile des Feldes parameterValueRangeList näher erläutert:
- parameter: Dieses Feld gibt einen oder mehrere Parameter einer Notification an.
- parameterValueRange: Dieses Feld gibt einen oder mehrere Werte oder einen Wertebereich der im Feld parameter enthaltenen Parameter an. Bei Verwendung der Felder parameter und parameterValueRange können Notifications von der Ausnahme umfasst werden, bei welchen ein in dem Feld parameter genannter Parameter einen in dem Feld parameterValueRange genannten Wert aufweist.

Das Netzwerkmanagementzentrum NMC kann somit durch Verwendung der Nachricht Request:lockEventReporting dem Netzelementmanager OMC mitteilen, dass Notifications von bestimmten Netzelementen NE 1, NE 2 und NE 3 von dem Netzelementmanager OMC generell nicht weiterzuleiten sind. Die Nachricht Request:lockEventReporting ermöglicht weiterhin, von diesem generellen Verbot der Weiterleitung aller Notifications bestimmter Agenten Ausnahmen zu machen, wobei die Ausnahmen sich auf alle oder auf manche der von dem Verbot betroffenen Netzelemente NE 1, NE 2 und NE 3 erstrecken können. Die Nachricht Request:lockEventReporting spezifiziert betreffend diejenigen Agenten, für welche eine Ausnahme von dem generellen Verbot der Weiterleitung aller Notifications gemacht werden soll, diejenigen Notifications, welche trotz des Verbots weiterzuleiten sind.

Wie in Figur 2 dargestellt, antwortet der Netzelementmanager OMC auf den Empfang der Nachricht Request:lockEventReporting mit der Nachricht Response:lockEventReporting, welche anzeigt, ob der Netzelementmanager OMC die Kombination aus Verbot und Ausnahme der Nachricht Request:lockEventReporting im folgenden anwendet. Der Netzelementmanager OMC kann die Nachricht Request:lockEventReporting beispielsweise dann nicht umsetzen, wenn er Inhalte der Nachricht nicht versteht oder aktuell überlastet ist. Die Nachricht Response:lockEventReporting enthält die Größe lockInvocationID als Identifikationsinformation der Nachricht Request:lockEventReporting. Die Größe lockInvocationID kann zu einem späteren Zeitpunkt von dem Netzelementmanager OMC und dem Netzwerkmanagementzentrum NMC zur Bezugnahme auf die Nachricht Request:lockEventReporting verwendet werden.

Der Netzelementmanager OMC wendet im folgenden die Vorgaben der Nachricht Request:lockEventReporting bei der Weiterleitung von Notifications an das Netzwerkmanagementzentrum NMC an. Nach Empfang einer Notification von einem Agenten prüft der Netzelementmanager OMC, ob die Notification für das Netzwerkmanagementzentrum NMC bestimmt ist. Hierzu kann ein geeigneter, von dem Netzwerkmanagementzentrum NMC konfigurierbarer Filter verwendet werden. Ist die Notification für das Netzwerkmanagementzentrum NMC bestimmt, so prüft der Netzelementmanager OMC weiterhin, ob in Bezug auf den Agenten, von welchem die Notification stammt, ein von dem Netzwerkmanagementzentrum NMC zuvor gesendetes Verbot der Weiterleitung von Notifications vorliegt. Ist dies nicht der Fall, wird die Notification an das Netzwerkmanagementzentrum NMC weitergeleitet. Liegt ein Verbot in Bezug auf den jeweiligen Agenten vor, prüft der Netzelementmanager OMC weiterhin, ob in Bezug auf das Verbot eine Ausnahme für bestimmte Notifications vorhanden ist, und ob diese Ausnahme die vorliegende Notification betrifft. Ist dies der Fall, wird die Notification an das Netzwerkmanagementzentrum NMC weitergeleitet. Besteht in Bezug auf die Notification keine Ausnahme des generellen Weiterleitungsverbots für Notifications des jeweiligen Agenten, so wird die Notification von dem Netzelementmanager OMC nicht an das Netzwerkmanagementzentrum NMC weitergeleitet.

Um dem Netzelementmanager OMC anzuzeigen, dass die Kombination aus Verbot und Ausnahme der Nachricht Request:lockEventReporting nicht mehr gilt, sendet das Netzwerkmanagementzentrum NMC die Nachricht Request:unlockEventReporting. Die Nachricht Request:unlockEventReporting wird vorzugsweise nur dann gesendet, wenn die durch das Feld timePeriod angegebene Zeitspanne noch nicht abgelaufen ist. Die Nachricht Request:unlockEventReporting beinhaltet die Identifikationsinformation des Feldes managerReference der Nachricht Request:lockEventReporting, sowie die Größe lockInvocationID, welche eindeutig die Nachricht Request:lockEventReporting identifiziert. Hierdurch ist es dem Netzelementmanager OMC möglich, Nachrichten Request:lockEventReporting verschiedener Manager zu unterscheiden, und auch verschiedene Nachrichten Request:lockEventReporting eines Managers auseinander zu halten. Der Netzelementmanager OMC reagiert auf die Nachricht Request:unlockEventReporting mit der Nachricht Response:unlockEventReporting, welche angibt, ob die Vorgaben der Nachricht Request:unlockEventReporting umgesetzt werden.

Eine weitere Situation, in welcher es vorteilhaft ist, wenn das Netzwerkmanagementzentrum NMC eine Verbotsnachricht an den Netzelementmanager OMC senden kann, ist der Empfang eines Kommandos, d.h. einer Aufforderung zur Durchführung einer bestimmten Funktion, durch ein Netzelement NE 1, NE 2 oder NE 3, wenn an dem jeweiligen Netzelement NE 1, NE 2 oder NE 3 aktuell beispielsweise Test-/Wartungsarbeiten durchgeführt werden. Das Netzwerkmanagementzentrum NMC sendet Kommandos, so genannte Requests, welche für Netzelementen NE 1, NE 2 und NE 3 bestimmt sind, an den Netzelementmanager OMC, welcher die Kommandos an das jeweilige Netzelement NE 1, NE 2 oder NE 3 weiterleitet. Die Netzelemente NE 1, NE 2 und NE 3 führen die Kommandos aus und geben erforderlichenfalls eine entsprechende Rückmeldung über die Ausführung oder über das Ergebnis der Ausführung des Kommandos. In bestimmen Situationen ist jedoch die Ausführung eines Kommandos durch ein Netzelement NE 1, NE 2 oder NE 3 nicht vorteilhaft, so z.B. kann die Ausführung eines Kommandos, gemäß welchem die Antennenleistung einzuschalten ist, für Personal vor Ort während Wartungsarbeiten gefährlich sein.

Um dem Netzelementmanager OMC anzuzeigen, dass bestimmte Agenten Kommandos zeitweilig nicht ausführen sollen, sendet das Netzwerkmanagementzentrum NMC die Nachricht Request:lockRequestExecution an den Netzelementmanager OMC, in dem Ablaufschema der Figur 4 dargestellt. Der Netzelementmanager OMC reagiert auf die Nachricht Request:lockRequestExecution, indem Kommandos für von dem Verbot betroffene Agenten, welche der Netzelementmanager OMC empfängt, von dem Netzelementmanager OMC nicht an diese Agenten weitergeleitet werden. Vorteilhafterweise bezieht sich das Verbot der Ausführung von Kommandos bzw. der Weiterleitung von Kommandos auf Kommandos aller Manager. Dies bedeutet, dass, wenn ein erster Manager den Netzelementmanager OMC mit einer Nachricht Request:lockRequestExecution aufgefordert hat, keine Kommandos an einen bestimmten Agenten weiterzuleiten, Kommandos für den Agenten, welche der Netzelementmanager OMC von einem zweiten Manager empfängt, nicht an den Agenten weitergeleitet werden. Alternativ hierzu ist es möglich, dass sich das Verbot der Nachricht Request:lockRequestExecution lediglich auf diejenigen Kommandos bezieht, welche der die Nachricht Request:lockRequestExecution sendende Manager abgibt.

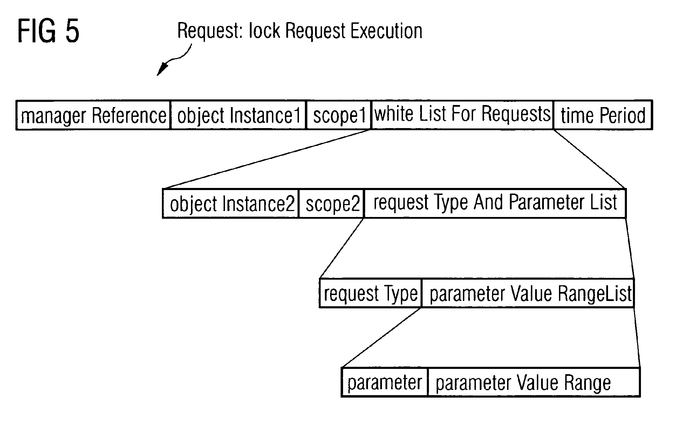

Figur 5 zeigt den Aufbau der Nachricht Request:lockRequestExecution. Zusätzlich zu den in Figur 5 dargestellten Bestandteilen kann die Nachricht Request:lockRequestExecution weitere, für das Verständnis der Erfindung nicht relevante Bestandteile aufweisen. Von der in Figur 5 dargestellten Reihenfolge der Bestandteile der Nachricht Request:lockRequestExecution kann abgewichen werden. Die Bezeichnungen der Bestandteile der Nachricht Request:lockRequestExecution gemäß Figur 5 beziehen sich sowohl auf die Bestandteile, als auch auf die Informationsgehalte der Bestandteile.

Im folgenden werden die Bestandteile der Nachricht Request:lockRequestExecution näher erläutert:
- managerReference: Dieses Feld beinhaltet Identifikationsinformationen des Netzwerkmanagementzentrums NMC.
- objectInstance1: Dieses Feld gibt eines oder mehrere der Netzelemente NE 1, NE 2 und NE 3 an, welche Kommandos nicht ausführen sollen, bzw. an welche Kommandos nicht weiterzuleiten sind.
- scope1: Dieses optionale Feld dient der Bezeichnung weiterer Agenten, welche Kommandos nicht ausführen sollen, bzw. an welche Kommandos nicht weiterzuleiten sind. Die durch das Feld scopel bezeichneten Agenten stehen in einem Objektbaum jeweils unter einem durch das Feld objectinstancel bezeichneten Agenten, mit welchem sie in dem Objektbaum verbunden sind.
- whiteListForRequests: Dieses Feld dient der Definition von Ausnahmen des Verbots der Ausführung bzw. der Weiterleitung von Kommandos. Sein Aufbau ist in Figur 5 wiedergegeben und wird untenstehend erläutert.
- timePeriod: Dieses Feld kann zur Angabe einer Zeitspanne genutzt werden, während welcher das Verbot der Ausführung bzw. Weiterleitung von Kommandos gilt.

Im folgenden werden die Bestandteile des Feldes whiteListForRequests, welches das Durchlassen bzw. Ausführen bestimmter Kommandos trotz der Verbotsregel der anderen Bestandteile der Nachricht Request:lockRequestExecution ermöglicht, näher erläutert:
- objectInstance2: Dieses optionale Feld dient der Angabe derjenigen Netzelemente NE 1, NE 2 und NE 3, welche von der Ausnahme des Verbots der Ausführung bzw. Weiterleitung von Kommandos betroffen sind. Hierbei kann es sich ausschließlich um Netzelemente NE 1, NE 2 und NE 3 handeln, welche durch das Feld objectinstancel bzw. objectinstancel in Kombination mit scopel der Nachricht Request:lockRequestExecution bezeichnet sind. Wird das Feld objectInstance2 nicht genutzt, bedeutet dies, dass alle Netzelemente NE 1, NE 2 und NE 3, welche durch das Feld objectinstancel der Nachricht Request:lockRequestExecution bezeichnet sind, von der Ausnahme betroffen sind.
- scope2: Wie bereits in Bezug auf die Nachricht Request:lockRequestExecution erläutert, kann das optionale Feld scope2 zur Angabe weiterer, im Objektbaum jeweils unter einem Agenten des Feldes objectInstance2 stehender Agenten eingesetzt werden.
- requestTypeAndParameterValueRangeList: Dieses Feld dient der Angabe derjenigen Kommandos, welche trotz des Verbots von den Agenten auszuführen bzw. an die Agenten weiterzuleiten sind. Sein Aufbau ist in Figur 5 wiedergegeben und wird untenstehend erläutert.

Im folgenden werden die Bestandteile des Feldes requestTypeAndParameterValueRangeList näher erläutert:
- requestType: Dieses Feld gibt Arten von Kommandos an, welche trotz des Verbots weiterzuleiten bzw. auszuführen sind. Beispielsweise kann das Netzwerkmanagementzentrum NMC hierdurch vorgeben, dass Not-Aus Kommandos oder Lesezugriffe nicht von dem Verbot betroffen sind.
- parameterValueRangeList: Während durch das Feld requestType bestimmte Arten von Kommandos von dem generellen Verbot der Weiterleitung ausgenommen werden können, ermöglicht das Feld parameterValueRangeList Kommandos gemäß bestimmten Inhalten dieser Kommandos von dem Verbot der Weiterleitung auszunehmen. Sein Aufbau ist in Figur 5 wiedergegeben und wird untenstehend erläutert.

Im folgenden werden die Bestandteile des Feldes parameterValueRangeList näher erläutert:
- parameter: Dieses Feld gibt einen oder mehrere Parameter eines Kommandos an.
- parameterValueRange: Dieses Feld gibt einen oder mehrere Werte oder einen Wertebereich der im Feld parameter enthaltenen Parameter an. Bei Verwendung der Felder parameter und parameterValueRange können Kommandos von der Ausnahmeregelung umfasst werden, bei welchen ein in dem Feld parameter genannter Parameter einen in dem Feld parameterValueRange genannten Wert aufweist.

Wie in Figur 4 dargestellt, antwortet der Netzelementmanager OMC auf den Empfang der Nachricht Request:lockRequestExecution mit der Nachricht Response:lockRequestExecution, welche anzeigt, ob der Netzelementmanager OMC die Kombination aus Verbot und Ausnahme der Nachricht Request:lockRequestExecution umsetzt. Weiterhin enthält die Nachricht Response:lockRequestExecution die Größe lockInvocationID als Identifikationsinformation der Nachricht Request:lockRequestExecution zur späteren Bezugnahme auf die Nachricht Request:lockRequestExecution durch den Netzelementmanager OMC oder das Netzwerkmanagementzentrum NMC.

Der Netzelementmanager OMC wendet im folgenden die Vorgaben der Nachricht Request:lockRequestExecution bei der Weiterleitung von Kommandos an. Nach Empfang eines Kommandos von einem Manager prüft der Netzelementmanager OMC, ob in Bezug auf den Agenten, für welchen das Kommando bestimmt ist, ein zuvor von dem Manager oder auch von einem anderen Manager empfangenes, noch nicht aufgehobenes, Verbot der Ausführung von Kommandos vorliegt. Ist dies nicht der Fall, wird das Kommando an den jeweiligen Agenten weitergeleitet. Liegt hingegen ein Verbot in Bezug auf den jeweiligen Agenten vor, prüft der Netzelementmanager OMC weiterhin, ob in Bezug auf das Verbot eine Ausnahme für bestimmte Kommandos vorhanden ist, welche das vorliegende Kommando betrifft. Ist dies der Fall, wird das Kommando an den Agenten weitergeleitet. Besteht in Bezug auf das Kommando keine Ausnahme des generellen Weiterleitungsverbots für Kommandos an den jeweiligen Agenten, so wird das Kommando von dem Netzelementmanager OMC nicht an den Agenten weitergeleitet.

Um dem Netzelementmanager OMC anzuzeigen, dass die Kombination aus Verbot und Ausnahme der Nachricht Request:lockRequestExecution nicht mehr gilt, sendet das Netzwerkmanagementzentrum NMC die Nachricht Request:unlockRequestExecution. Die Nachricht Request:unlockRequestExecution wird vorzugsweise nur dann gesendet, wenn die in dem Feld timePeriod der Nachricht Request:lockRequestExecution enthaltene Zeitspanne noch nicht abgelaufen ist. Die Nachricht Request:unlockRequestExecution beinhaltet die Identifikationsinformation des Feldes managerReference der Nachricht Request:lockRequestExecution, sowie die Größe lockInvocationID, welche eindeutig die Nachricht Request:lockRequestExecution identifiziert. Hierdurch ist es dem Netzelementmanager OMC möglich, Nachrichten Request:lockRequestExecution verschiedener Manager zu unterscheiden, und auch verschiedene Nachrichen Request:lockRequestExecution eines Managers. Der Netzelementmanager OMC reagiert hierauf mit der Nachricht Response:unlockRequestExecution, welche angibt, ob die Vorgaben der Nachricht Request:unlockRequestExecution umgesetzt werden.

Bislang wurde der Fall geschildert, dass sich das Verbot zur Durchführung von Kommandos bzw. die Ausnahme zu diesem Verbot auf die Netzelemente NE 1, NE 2 und NE 3 beziehen und der Netzelementmanager OMC dafür verantwortlich ist, die Kommandos gemäß dem Verbot und der Ausnahmen an die jeweiligen Netzelemente NE 1, NE 2 und NE 3 weiterzuleiten. Alternativ ist es möglich, dass der Netzelementmanager OMC die Nachricht Request:lockRequestExecution an die von dem Verbot und/oder der Ausnahme betroffenen Netzelemente NE 1, NE 2 und NE 3 weiterleitet und die Netzelemente NE 1, NE 2 und NE 3 vor der Durchführung von Kommandos überprüfen, ob für sie ein Verbot und gegebenenfalls eine Ausnahme von dem Verbot vorliegt. Weiterhin ist es möglich, dass sich die von dem Verbot und gegebenenfalls von der Ausnahme der Nachricht Request:lockRequestExecution betroffenen Kommandos auf Kommandos beziehen, welche von dem Netzelementmanager OMC durchzuführen sind.

Es ist vorteilhaft, wenn zwischen dem Netzelementmanager OMC und dem Netzwerkmanagementzentrum NMC vereinbart wird, dass die Verbote der Nachrichten Request:lockEventReporting und Request:lockRequestExecution sich nicht auf bestimmte Meldungen bzw. Kommandos beziehen dürfen. So kann beispielsweise festgelegt werden, dass das Kommando zur Aufhebung oder Änderung eines durch eine Nachricht Request:lockRequestExecution erfolgten Verbots grundsätzlich auszuführen ist, und somit trotz mangelnder expliziter Nennung dieses Kommandos bei den Ausnahmen der Nachricht Request:lockRequestExecution die Ausführung dieses Kommandos nicht verboten ist. Ähnliches gilt für das Verbot der Weiterleitung von Meldungen. Meldungen, deren Weiterleitung an den Manager vorteilhafterweise nicht verbietbar sein sollte, sind die Meldungen des Communication Surveillance IRP (IRP: Integration Reference Point) gemäß den Standards 3GPP TS 32.35n mit n=1...4. Die nicht verbietbaren Meldungen bzw. Kommandos müssen somit nicht explizit in den Nachrichten Request:lockEventReporting und Request:lockRequestExecution genannt werden, und sind dennoch von den Ausnahmen umfasst.

Im folgenden wird ein konkretes Beispiel für ein Verbot der Weiterleitung von Notifications betrachtet. Es sollen am 3.3.2005 von 10:00 Uhr bis 10:30 Uhr alle Notifications von dem gemanagten Element Nr. 81379 und von allen im Objektbaum unter dem Element Nr. 81379 liegenden Elementen, welche mit dem Element Nr. 81379 verbunden sind, nicht zu dem Manager Nr. 81541 übertragen werden, außer den Meldungen von Feueralarm und Meldungen des Communication Surveillance IRP, sowie Meldungen von Alarmen der Stufen major und critical für den Billing Service. Zur Umsetzung dieser Vorgaben ist die Nachricht Request:lockEventReporting folgendermaßen ausgestaltet:

Das Feld managerReference der Nachricht Request:lockEventReporting ist mit der Identifikationsinformation 81514 des Managers belegt, das Feld objectinstancel der Nachricht Request:lockEventReporting mit der Identifikationsnummer 81379 des gemanagten Elements, und das Feld scopel mit der Größe "allLevelsDown", welche bewirkt, dass von allen Agenten unterhalb des, welche in dem Objektbaum mit dem gemanagten Elements Nr. 81379 verbunden sind, keine Notifications an den Manager Nr. 81541 weitergeleitet werden dürfen. Die Felder object Instance2 und scope2 des Feldes whiteListForEvents sind nicht belegt. Das Feld eventTypeAndParameterValueRangeList ist bezüglich des Feldes eventType mit den Größen "Firealarm" zur Angabe der Meldungsart Feueralarm, "notify-Heartbeat" zur Angabe der Meldungen des Communication Surveillance IRP, und "ProcessingAlarm" zur Angabe der Alarme des Billing Service belegt. Bezüglich der Alarme des Billing Service wird weiterhin das Feld parameterValueRangeList verwendet, welches mit dem Wertepaar "severity", d.h. Wichtigkeit, für das Feld parameter und den hierzu gehörigen Wichtigkeitsangaben "major, critical" für das Feld parameterValueRage belegt ist, sowie mit dem Wertepaar "affectedService", d.h. betroffener Dienst, für das Feld parameter und der hierzu gehörigen Angabe "Billing" für das Feld parameterValueRange. Das Feld timePeriod beinhaltet die Angabe "vom 03.03.2005, 10:00 Uhr bis zum 03.03.2005, 10:30 Uhr".

Weiterhin wird ein konkretes Beispiel für ein Verbot der Ausführung von Kommandos betrachtet. Es sollen am 03.03.2005 von 10:00 Uhr bis 10:30 Uhr keine Kommandos vom gemanagten Element Nr. 81379 ausgeführt werden, außer dem Kommando Not-Aus und lesenden Zugriffen. Das Feld managerReference der Nachricht Request:lockRequestExecution ist mit dem Wert 81514, der Identifikationsinformation des Managers, welcher die Nachricht Request:lockRequestExecution sendet, belegt, das Feld objectinstancel der Nachricht Request:lockRequestExecution mit der Identifikationsnummer 81379 des gemanagten Elements, und das Feld scopel mit der Größe "allLevelsDown", welche bewirkt, dass von allen Agenten unterhalb des gemanagten Elements Nr. 81379, welche im Objektbaum mit dem gemanagten Elements Nr. 81379 verbunden sind, keine Kommandos ausgeführt werden dürfen. Die Felder objectInstance2 und scope2 des Feldes whiteListForRequests sind nicht belegt. Das Feld requestTypeAndParameterValueRangeList trägt zur Anzeige des Kommandos Not-Aus die Größe "SET", wobei das hierzu gehörige Feld parameterValueRangeList für das Feld parameter mit der Größe "administrativeState" und für das Feld parameterValueRange mit der Größe "locked" belegt ist. Weiterhin ist das Feld requestTypeAndParameterValueRangeList zur Anzeige der lesenden Zugriffe mit der Größe "GET" belegt. Das Feld timePeriod beinhaltet die Angabe "vom 03.03.2005, 10:00 Uhr bis zum 03.03.2005, 10:30 Uhr".

Die Nachrichten Request:lockEventReporting und Request:lockRequestExecution können jeweils auch ohne die Felder WhiteListForEvents bzw. WhiteListForRequests eingesetzt werden. In diesem Fall handelt es sich um reine Verbotsnachrichten, welche die von dem Verbot betroffenen Agenten näher spezifizieren. Ein Manager kann diese Verbotsnachrichten bei Bedarf um die Felder WhiteListForEvents bzw. WhiteListForRequests ergänzen, um durch das Zulassen von Ausnahmen zu den Verboten einen flexibleren Umgang mit den Verboten zu ermöglichen.

## Patentansprüche

1. Verfahren zum Betreiben eines zumindest einen Manager (NMC) und Agenten (OMC, NE1, NE2, NE3) umfassenden Managementsystems, bei dem
der Manager (NMC) Meldungen von Agenten (OMC, NE1, NE2, NE3) empfängt,
der Manager (NMC) eine Nachricht (Request:lockEventReporting) sendet mit einem Verbot, Meldungen an ihn zu senden,
wobei die Nachricht (Request:lockEventReporting) eine Angabe (whiteListForEvents) von von dem Verbot ausgenommenen Meldungen beinhaltet.

2. Verfahren zum Betreiben eines zumindest einen Manager (NMC), einen Agenten (OMC) und einen weiteren Agenten (NE1, NE2, NE3) umfassenden Managementsystems, bei dem der Agent (OMC)
Meldungen von dem weiteren Agenten (NE1, NE2, NE3) empfängt und an den Manager (NMC) weiterleitet, von dem Manager (NMC) eine Nachricht (Request:lockEventReporting) empfängt mit einem Verbot, Meldungen des weiteren Agenten (NE1, NE2, NE3) an ihn weiterzuleiten, wobei die Nachricht (Request:lockEventReporting) eine Angabe (whiteListForEvents) von von dem Verbot ausgenommenen Meldungen beinhaltet, und
nach Empfang einer Meldung des weiteren Agenten (NE1, NE2, NE3) bei einer Entscheidung über die Weiterleitung der Meldung zum Manager (NMC) das Verbot und die Ausnahme von dem Verbot berücksichtigt.

3. Verfahren nach Anspruch 1 oder 2, bei dem das Verbot beschränkt ist auf einen oder mehrere bestimmte Agenten (NE1, NE2, NE3) und/oder auf eine bestimmte Zeitspanne (timePeriod).

4. Verfahren nach einem der Ansprüche 1 bis 3, bei dem die Ausnahme von dem Verbot beschränkt ist auf einen oder mehrere bestimmte Agenten (NE1, NE2, NE3) und einen oder mehrere bestimmte Meldungen dieser Agenten (NE1, NE2, NE3) .

5. Verfahren nach Anspruch 4, bei dem
die bestimmen Meldungen in der Nachricht (Request:lockEventReporting) durch die Angabe von mindestens einer Meldungsart (eventType) und/oder von mindestens einem Meldungsinhalt (parameterValueRangeList) indiziert werden.

6. Verfahren zum Betreiben eines zumindest einen Manager (NMC) und Agenten (OMC, NE1, NE2, NE3) umfassenden Managementsystems, bei dem
der Manager (NMC) Kommandos an Agenten (OMC, NE1, NE2, NE3) sendet,
der Manager (NMC) eine Nachricht (Request:lockRequestExecution) sendet mit einem Verbot, Kommandos des Managers (NMC) und/oder eines anderen Managers auszuführen und/oder weiterzuleiten.

7. Verfahren nach Anspruch 6, bei dem
die Nachricht (Request:lockRequestExecution) eine Angabe (whiteListForRequests) von von dem Verbot ausgenommenen Kommandos beinhaltet.

8. Verfahren zum Betreiben eines zumindest einen Manager (NMC), einen Agenten (OMC) und einen weiteren Agenten (NE1, NE2, NE3) umfassenden Managementsystems, bei dem der Agent (OMC)
von dem Manager (NMC) Kommandos empfängt und an den weiteren Agenten (NE1, NE2, NE3) zur Ausführung weiterleitet,
von dem Manager (NMC) eine Nachricht (Request:lockRequestExecution) empfängt mit einem Verbot, Kommandos des Managers (NMC) und/oder eines anderen Managers an den weiteren Agenten (NE1, NE2, NE3) weiterzuleiten,
nach Empfang eines Kommandos von dem Manager (NMC) und/oder von einem anderen Manager bei einer Entscheidung über die Weiterleitung des Kommandos an den weiteren Agenten (NE1, NE2, NE3) das Verbot berücksichtigt.

9. Verfahren nach Anspruch 8, bei dem
die Nachricht (Request:lockRequestExecution) eine Angabe (whiteListForRequests) von von dem Verbot ausgenommenen Kommandos beinhaltet, und
der Agent (OMC) nach Empfang eines Kommandos von dem Manager (NMC) und/oder von einem anderen Manager bei einer Entscheidung über die Weiterleitung des Kommandos an den weiteren Agenten (NE1, NE2, NE3) das Verbot und die Ausnahme berücksichtigt.

10. Verfahren nach einem der Ansprüche 6 bis 9, bei dem das Verbot beschränkt ist auf einen oder mehrere bestimmte Agenten (NE1, NE2, NE3) und/oder auf eine bestimmte Zeitspanne (timePeriod).

11. Verfahren nach einem der Ansprüche 7, 9 oder 10, bei dem die Ausnahme von dem Verbot beschränkt ist auf einen oder mehrere bestimmte Agenten (NE1, NE2, NE3) und einen oder mehrere bestimmte Kommandos für diese Agenten (NE1, NE2, NE3).

12. Verfahren nach Anspruch 11, bei dem die bestimmen Kommandos in der Nachricht (Request:lockRequestExecution) durch die Angabe von mindestens einer Kommandoart (requestType) und/oder von mindestens einem Kommandoinhalt (parameterValueRangeList) indiziert werden.

13. Manager (NMC) für ein zumindest den Manager (NMC) und Agenten (OMC, NE1, NE2, NE3) umfassendes Managementsystem, mit
Mitteln zum Empfangen von Meldungen von Agenten (OMC, NE1, NE2, NE3),
Mitteln zum Senden einer Nachricht (Request:lockEventReporting) mit einem Verbot, Meldungen an den Manager (NMC) zu senden,
wobei die Nachricht (Request:lockEventReporting) eine Angabe (whiteListForEvents) von von dem Verbot ausgenommenen Meldungen beinhaltet.

14. Manager (NMC) für ein zumindest den Manager (NMC) und Agenten (OMC, NE1, NE2, NE3) umfassendes Managementsystem, mit
Mitteln zum Senden von Kommandos an Agenten (OMC, NE1, NE2, NE3)
Mitteln zum Senden einer Nachricht (Request:lockRequestExecution) mit einem Verbot, Kommandos des Managers (NMC) und/oder eines anderen Managers auszuführen und/oder weiterzuleiten.

15. Manager nach Anspruch 14, mit
Mitteln zum Senden einer Nachricht (Request:lockRequestExecution) mit einem Verbot, Kommandos des Managers (NMC) und/oder eines anderen Managers auszuführen und/oder weiterzuleiten, wobei die Nachricht (Request:lockRequestExecution) eine Angabe (whiteListForRequests) von von dem Verbot ausgenommenen Kommandos beinhaltet.

16. Agent (OMC) für ein zumindest den Agenten (OMC), einen Manager (NMC) und einen weiteren Agenten (NE1, NE2, NE3) umfassendes Managementsystem, mit
Mitteln zum Empfangen von Meldungen von dem weiteren Agenten (NE1, NE2, NE3) und zum Weiterleiten der Meldungen an den Manager (NMC),
Mitteln zum Empfangen einer Nachricht (Request:lockEventReporting) von dem Manager (NMC) mit einem Verbot, Meldungen des weiteren Agenten (NE1, NE2, NE3) an ihn weiterzuleiten, wobei die Nachricht (Request:lockEventReporting) eine Angabe (whiteListForEvents) von von dem Verbot ausgenommenen Meldungen beinhaltet, und
Mitteln zum Berücksichtigen des Verbots und der Ausnahme von dem Verbot nach Empfang einer Meldung des weiteren Agenten (NE1, NE2, NE3) bei einer Entscheidung über die Weiterleitung der Meldung zum Manager (NMC).

17. Agent (OMC) für ein zumindest den Agenten (OMC), einen Manager (NMC) und einen weiteren Agenten (NE1, NE2, NE3) umfassendes Managementsystem, mit
Mitteln zum Empfangen von Kommandos von dem Manager (NMC) und zum Weiterleiten der Kommandos an den weiteren Agenten (NE1, NE2, NE3) zur Ausführung,
Mitteln zum Empfangen einer Nachricht (Request:lockRequestExecution) von dem Manager (NMC) mit einem Verbot, Kommandos des Managers (NMC) und/oder eines anderen Managers an den weiteren Agenten (NE1, NE2, NE3) weiterzuleiten,
Mitteln zum Berücksichtigen des Verbots nach Empfang eines Kommandos von dem Manager (NMC) und/oder von einem anderen Manager bei einer Entscheidung über die Weiterleitung des Kommandos an den weiteren Agenten (NE1, NE2, NE3) .

18. Agent (OMC) nach Anspruch 17,mit
Mitteln zum Empfangen einer Nachricht (Request:lockRequestExecution) von dem Manager (NMC) mit einem Verbot, Kommandos des Managers (NMC) und/oder eines anderen Managers an den weiteren Agenten (NE1, NE2, NE3) weiterzuleiten, wobei die Nachricht (Request:lockRequestExecution) eine Angabe (whiteListForRequests) von von dem Verbot ausgenommenen Kommandos beinhaltet,
Mitteln zum Berücksichtigen des Verbots und der Ausnahme von dem Verbot nach Empfang eines Kommandos von dem Manager (NMC) und/oder von einem anderen Manager bei einer Entscheidung über die Weiterleitung des Kommandos an den weiteren Agenten (NE1, NE2, NE3).
